Europäisches Patentamt

European Patent Office

Office européen des brevets

(19)

(11) EP 0 516 202 B1

(12) EUROPEAN PATENT SPECIFICATION

(45) Date of publication and mention
of the grant of the patent:
**30.07.1997 Bulletin 1997/31**

(51) Int Cl.6: **C08F 220/14**, C08F 218/10

(21) Application number: **92201175.4**

(22) Date of filing: **27.04.1992**

(54) **Polymer latices from esters of (meth)acrylic acid and a vinyl ester of a branched chain carboxylic acid**

Polymer Latice von Estern von (meth) Acrylsäure und Vinylestern von verzweigter Karboxylsäure

Latices de polymères d'esters d'acide(meth) acryliques et d'esters vinyliques d'acides carboxyliques ramifiés

(84) Designated Contracting States:
**BE CH DE ES FR GB IT LI NL SE**

(30) Priority: **02.05.1991 GB 9109484**

(43) Date of publication of application:
**02.12.1992 Bulletin 1992/49**

(73) Proprietor: **SHELL INTERNATIONALE
RESEARCH MAATSCHAPPIJ B.V.
2596 HR Den Haag (NL)**

(72) Inventors:
  • **Coppin, Linda Louise-Marie Guillaume
    B-1348 Ottignies Louvain-La-Neuve (BE)**
  • **Slinckx, Martine Madeleine Christiane Pierre
    B-1348 Ottignies Louvain-La-Neuve (BE)**
  • **Scholten, Henricus Paulus Hubertus
    B-1348 Ottignies Louvain-La-Neuve (BE)**

(56) References cited:
**EP-A- 0 431 656        EP-A- 0 486 110
GB-A- 967 479        US-A- 3 202 625**

Remarks:
The file contains technical information submitted after the application was filed and not included in this specification

**Description**

This invention relates to polymers of esters of (meth)acrylic acid and a vinyl ester of a branched chain carboxylic acid, to latices containing such polymers, to the preparation of such polymers, to coating compositions comprising such latices and to solid polymeric products, for example redispersible latex powders formed by drying of such latices.

GB-A-967,479 actually discloses a method for the preparation of a stable latex comprising copolymerising a monomer mixture containing

(1) a vinyl ester of saturated aliphatic monocarboxylic acids in which the carboxyl groups are attached to tertiary and/or quaternary carbon atoms,
(2) an alkyl ester of a polymerisable alpha,beta-ethylenically unsaturated carboxylic acid, and
(3) from 0.5 to 5% by weight of total monomer of an alpha,beta-ethylenically unsaturated carboxylic acid,

in an aqueous emulsion at a temperature between 0 °C and 90 °C and using a free radical initiator.

More particularly in the examples I-IX, monomer premix compositions are used as starting materials which comprise as sole alkyl ester of alpha,beta-ethylenically unsaturated carboxylic acid component ethyl acrylate or propyl acrylate or methyl methacrylate, whereas as the vinyl ester of saturated branched aliphatic monocarboxylic acid component, inter alia mixtures of several carboxylic acids are applied, which contain from 7-19 carbon atoms.

Moreover in page 3 and in claim 8 of this publication as preferred combination of starting monomers has been mentioned, that of ethyl acrylate and vinyl pivalate with methacrylic acid in proportions from 60-82 parts of ethyl acrylate, from 17-39 parts vinyl pivalate and from 1-3 parts of methacrylic acid respectively.

This process has been found to provide only insufficient polymerisation yields, so that the latices obtained are still containing a substantial amount of residual monomers. The presence of free monomers in the latices is considered disadvantageous. These free monomers are substantially contributing to the odour of the latices and latex powders, cause a deleterious effect on latex stability and in the context of coating applications have shown a deleterious effect on the hardness, outdoor durability and blocking resistance of films formed by drying of the latices. Furthermore, from the point of view of toxicity it is desirable to minimise free monomers.

Moreover, it was still a generally existing conception under persons skilled in the art that alkyl methacrylates and/or alkyl acrylates and vinyl esters with a large branched carbon chain were extremely difficult to copolymerise into a substantially random copolymer, due to a large difference in reactivity of the respective monomers. Therefore the copolymerisation of monomer pairs to a polymer dispersion at lower temperatures showing attractive properties of the coating films, was regarded as rather difficult or even impossible as can be derived from e.g. VeoVa Technical Manual VM 2.1, pages 7 and 8, Technical Bulletin, issued June, 1988 (VeoVa is a trade mark).

Said conception also could be derived from the lectures held during FATIPEC Meeting Louvain-la-Neuve, Belgium, September 11, 1989 and during NVVT Meeting, Rotterdam, the Netherlands, May 23, 1989.

In addition, the theoretically expected yield cannot be reached because some of the monomer does not polymerise and give rise to the aforementioned unattractive properties.

Due to a growing need of environmentally friendly aqueous coatings having more attractive properties, and/or obtained by a more reliable and efficient copolymerisation, intensive further research effort was directed to the development of latices, containing a polymer of vinyl acetate and vinyl esters of one or more tertiary carboxylic acid(s) and having attractive physical properties in coating formulations and a relatively higher solids content and a low free monomer content. Although polymers containing latices were known in principle to give acceptable properties when used in coating applications, as is known from e.g. EP-A-315278, and US-A 3,654,209, there was a strong need to improve the mechanical properties, chemical resistance and water resistance of the finally obtained coating film after drying coating compositions, containing these polymers, due to modern industrial requirements.

More particularly, it will be appreciated that there is a strong need to improve the properties of latices further in order to meet the modern requirements of glossy emulsion paints and anti-corrosion paints, characterised by a low free monomer content, good water spot resistance, low water absorption, alkali resistance and freeze-thaw stability. Moreover there is a need for an efficient, reliable, high monomer conversion process for the preparation of such latices, in order to enable the manufacture via an economically attractive way and avoiding the disadvantages (bad smell and instability during storage) of free monomers as much as possible.

As a result of extensive research and experimentation there were surprisingly found such polymer compositions aimed at, showing a very attractive combination of properties such as high monomer conversion and chemical stability, alkali resistance, and light resistance of the latex film.

Accordingly a group of polymers is provided characterised in that they are obtainable from a starting comonomer mixture comprising

(i) methyl methacrylate;

(ii) butyl acrylate;

(iii) the vinyl ester of pivalic acid ("vinyl pivalate");

(iv) a stabilising monomer, selected from the group comprising acrylic acid, methacrylic acid, acrylamide, methacrylamide, diacetone acrylamide and sodium vinyl sulphonate and mixtures thereof, of which acrylic acid, methacrylic acid and methacrylamide are the most preferred, in an amount of from 0.5 to 5% by weight relative to the total weight of monomers,

wherein the respective weight percentages of the components (i), (ii) and (iii) being calculated relative to the total weight of the sum of the amounts of these components, are simultaneously fulfilling the following equations, each describing compositions having equal performance contour lines in a triangle diagram:

$$\text{(I)} \qquad \text{CONV.} = 100\,x_1 + 100\,x_2 + 99.3\,x_3 + 0.2\,x_1.x_3 - 1\,x_2.x_3 - 4.8\,x_1.x_2.x_3$$

$$\text{(II)} \qquad T_g = 112\,x_1 - 44\,x_2 + 71\,x_3 - 88\,x_1.x_2 - 86\,x_1.x_3 - 66\,x_2.x_3 + 36\,x_1.x_2.x_3$$

$$\text{(III)} \qquad \text{WA} = 2\,x_1 + 62\,x_2 + 7\,x_3 + 56.8\,x_1.x_2 + 3.6\,x_1.x_3 + 17.6\,x_2.x_3 - 11.7\,x_1.x_2.x_3$$

$$\text{(VI)} \qquad \text{WSR} = 10\,x_1 + 10\,x_3 - 4\,x_1.x_2 - 12\,x_2.x_3 + 57\,x_1.x_2.x_3$$

wherein CONV represents the monomer conversion and has a value of at least 99.0% (m/m) when an emulsion premix containing components (i) to (iv), an alkaryl sulphonate anionic surfactant, a non-ionic surfactant and potassium persulphate in demineralized water is added over 3 hours at 80 °C to the alkaryl sulphonate anionic surfactant and potassium persulphate in demineralized water, and the resulting mixture is digested for two hours at the same temperature, wherein the emulsion premix contains from 15.0 to 50.0 %wt of component (i), from 24.0 to 33.0 %wt of component (ii), from 20.0 to 60.0 %wt of component (iii) and from 1.0 to 2.0 %wt of component (iv), the weight percentages being based on the total of components (i) to (iv) and amounting to 100%, $T_g$ represents the glass transition temperature having a value in the range of from 0 °C to 50 °C, wherein WA represents the water absorption value being at most 45% m/m measured as specified hereinafter, wherein WSR represents the water spot value being at least 5, after 24 hours as specified hereinafter wherein $x_1$ represents the weight percentage of component (i), $x_2$ represents the weight percentage of component (ii) and wherein $x_3$ represents the weight percentage of component (iii), the values of $x_1$, $x_2$ and $x_3$ being at least 0.5% by weight, calculated on the total weight of components (i), (ii) and (iii).

It is observed that the exact values of the coefficients in equations (I) to (IV) are slightly depending on the specific types of the applied stabilising monomer and surfactant, and on the concentrations thereof. These small deviations will, however, easily be taken into account by persons skilled in the art.

In this respect reference is made to EP-A-431656 and EP-A-486110, both published after the priority date of the present invention, which also describe polymers obtainable from (i) methylmethacrylate, (ii) butylacrylate, (iii) the vinyl esters of tertiary carboxylic acids and a stabilizing monomer. However, in case of EP-A-431656 the acid of component (iii) has 9 or 10 carbon atoms, whereas the acids of component (iii) according to EP-A-486110 contain 10 carbon atoms.

According to a preferred embodiment of the present invention, polymers are provided, which are derivable from the components (i) - (iv), wherein the component (iv) is consisting of acrylic acid, methacrylic acid or methacrylamide in an amount of 0.5 - 2% by weight and preferably 1% by weight, wherein the respective weight percentages $x_1$, $x_2$ and $x_3$ of the components (i), (ii) and (iii), being calculated relative to the total weight of the sum of the amounts of these components, are simultaneously fulfilling the equations (I) to (IV) wherein CONV, $T_g$, WA, WSR have the same value as defined above. More preferably component (iv) is acrylic acid in concentration of 1% by weight.

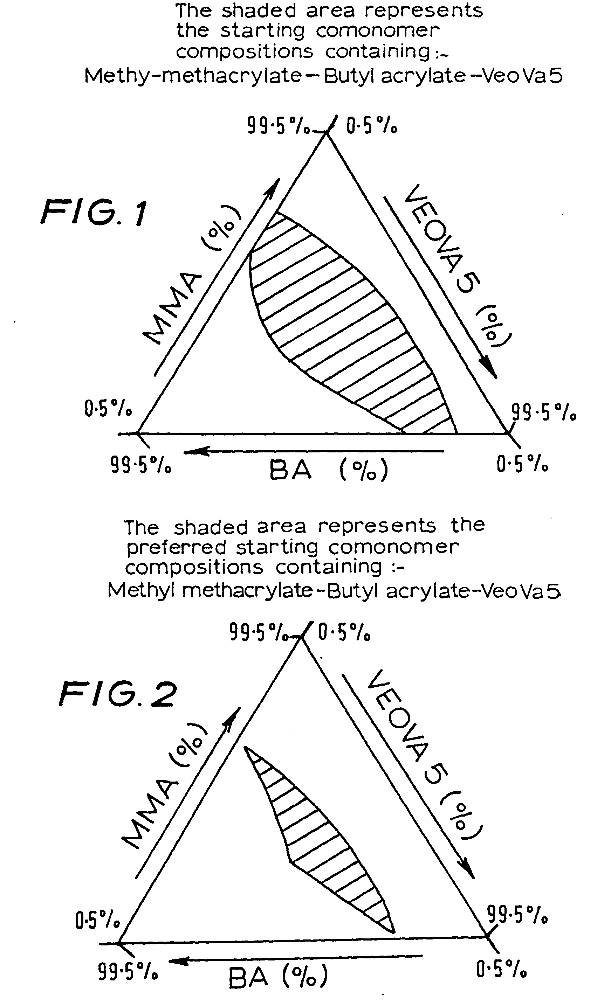

The starting comonomer compositions containing monomers (i), (ii) and (iii) in proportions meeting the aforementioned equations are represented by the shaded area in figure 1.

It will be appreciated that vinyl pivalate, as component (iii) to be applied according to the present invention, is normally manufactured starting from a technical quality alkene and that in spite of application of modern separation techniques applied on the initially obtained vinyl ester the desired main component may contain similar homologues in minor amounts which can be used successfully for the preparation of latices according to the present invention. As component (iii), predominantly containing the vinyl pivalate, preferably VeoVa 5 is used as starting comonomer.

A more preferred group of polymers of the present invention are derivable from comonomer mixtures, wherein the weight fractions of said components (i), (ii) and (iii) simultaneously fulfil the equations (I) to (IV), wherein, however, CONV has now a value of at least 99.3% (m/m), $T_g$ has now a value in the range of from 10 °C and 35 °C, the water absorption WA has now a value of at most 35%, and the water spot resistance WSR has now a value of at least 6 and wherein component (iv) is 1% by weight acrylic acid.

These preferred starting comonomer compositions, containing monomers (i), (ii) and (iii) in the suitable proportions meeting the aforementioned requirements are represented by the shaded area in figure 2.

It was found that the application of other stabilising monomers instead of acrylic acid in the same weight percentage did not change these shaded areas in figures 1 and 2 significantly.

One of the most preferred embodiments of the polymers of the present invention is formed by those, characterised in that they are derivable from a starting comonomer mixture as set out above, comprising:

from 3 to 61% by weight of methyl methacrylate;
from 20 to 39% by weight of butyl acrylate;
from 20 to 39% by weight of butyl acrylate;
from 5 to 75% by weight of vinyl esters of tertiary carboxylic acids containing 5 carbon atoms; and
1% by weight of acrylic acid, the total amounting to 100%.

It has moreover been found, that by the use of only one copolymerisable stabilising component (iv), latices could be obtained showing an acceptable low free monomer content, i.e. < 0.7% by weight, based on the solids content, and a good stability.

It will be appreciated that the present invention is also relating to latices, containing as polymeric constituent 40-60% by weight of a polymer as described above and more preferably those wherein the polymeric constituent amounts from 45 to 50% by weight, to coating compositions comprising a latex and preferably at least one pigment, and to solid polymeric products formed by physical drying of such latices or coatings and to redispersible latex powders formed by physical drying of such latices and to coating compositions derived from such powders.

A further aspect of the present invention relates to a process for the preparation of latices containing the aforementioned specified polymers.

It was found in addition that these attractive results could be reached by effecting thermal initiation of the starting reaction mixture, being rather independent on the actual relative proportions of the components (i)-(iv) in the indicated ranges.

The polymers containing latices according to the present invention may be prepared under conditions which are known in the art and generally involve a temperature of 20-100 °C. More particularly the preparation process is carried out in a temperature range of from 60-100 °C, and preferably from 75 to 85 °C.

In the reaction mixture additional stabilisers, optionally to be copolymerised, one or more polymerisation initiators and optionally buffering agents are to be included, but more preferably not any buffering agent is used.

Stabilisers suitably constitute 2-8% by weight, calculated relative to the total weight of the monomer constituents. Suitable stabilisers and the amount they are used in are well-known in the art and described in for instance EP-A-295,727, and in Emulsifiers and detergents, international edition, volume 1 (by Mc Cutcheon, The Manufacturing Confectioner Publishing Co., Glen Rock NY, USA 1990). Preferably an anionic and a non-ionic surface active agent are used. Especially preferred is the use of an alkylaryl sulphonate together with an ethoxylated nonylphenol (e.g., "Arkopol N230", a trademark).

Likewise suitable free radical initiators, radical formation accelerators, buffering agents and their relative amounts are also well-known in the art and disclosed in the above cited Technical Manual and European patent application.

According to a preferred embodiment of the process of the present invention, thermal initiation is applied and the reaction is carried out in an inert atmosphere, nitrogen suitably being used to flush out the reaction vessel prior to the start of the reaction.

According to a further preferred embodiment of the process of the present invention, an emulsion premix is prepared in demineralised water from a part of one or more surface active agent, and a part of one or more initiators and comonomers (i)-(iv). The reactor is flushed with nitrogen and filled with about an equal amount of demineralised water, and the remaining amounts of the surface active agent(s) and initiator.

The reactor is heated to a temperature in the specified range, e.g. 80 °C, the nitrogen stream is stopped and the emulsion premix addition is started. The addition is normally extended over a period of from 2 to 5 hours during which the originally adjusted temperature is maintained. A post polymerisation period of from 1 to 3 hours is normally used at a temperature of e.g. 80 °C.

After this post polymerisation, the latex obtained is cooled and if necessary filtered.

The generally obtained latices have a total solids content in the range of from 30-60% by weight of the latex and preferably from 40-50% and a weight average particle diameter in the range of from 90-170 nm depending on the surfactant repartition between the emulsion premix and the initial reactor charge.

A further aspect of the present invention relates to a latex produced by the process described above, and the polymer which forms on physical drying of such a latex, for example to form a coating on a substrate or a powder intended for reconstitution as a latex or use in a concrete or other latex based end product.

Latices in accordance with the invention may find application in concretes, lacquers, paints, wood coatings, anti-corrosion paints and textured coatings. They are of particular interest for composing lacquers and paints due to their good film forming properties, their excellent water resistance, their high pigment binding power, the lack of tackiness of the films, their alkali resistance and resistance to ultra violet light. Paints in accordance with the invention contain the latices of the invention, pigments, and common further constituents such as fillers, cosolvents, thickeners, dispersants, preservatives, corrosion inhibitors, and anti-foaming agents.

It will be appreciated therefore that coating compositions, comprising the latices according to the present invention and solid polymer product formed thereof, also form an aspect of the present invention.

The invention will now be further described with reference to the following examples.

EXAMPLE I

In a three litre reaction flask, provided with a central and four peripheral glass openings fitted with a reflux condenser, stirrer, thermometer, nitrogen inlet tube and emulsion premix inlet tube.

An emulsion premix is prepared by mixing the following ingredients in the given amounts.

| | |
|---|---|
| Demineralised water | 575.0 g |
| Humifen SF 90 (10% in water)[+] | 95.0 |
| Arkopal N230 (25% in water)[++] | 120.0 |
| Potassium persulphate | 4.0 |
| Methyl methacrylate | 330.0 |
| n-Butyl acrylate | 330.0 |
| VeoVa 5[+++] | 330.0 |
| Acrylic acid | 10.0 |

+ "Humifen SF 90" is a registered trade mark for an alkaryl sulphonate anionic surfactant

++ "Arkopal N230" is a registered trade mark for a non-ionic surfactant

+++ "VeoVa 5" is a registered trade mark for vinyl esters of tertiary carboxylic acid containing 5 carbon atoms

The reaction flask is swept with nitrogen and the following ingredients are added:

| | |
|---|---|
| Demineralised water | 480.2 g |
| Humifen SF 90 (10% in water) | 5.0 |
| Potassium persulphate | 1.0 |

The ingredients in the reaction flask are heated to 80 °C. When the temperature reaches 80 °C, the nitrogen stream is stopped and the emulsion premix addition is started. The monomer pre-emulsion is added regularly over a period of 3 hours and a temperature of 80 °C is maintained. A 2-hour digestion period (at the same temperature) is applied. After the post-cooking, the latex is cooled and if necessary filtered. In general, these latices have a total solids content of about 45% and the weight average particle diameter is about 150 nm.

The obtained latices were tested as to water absorption, water spot resistance of latex polymer film, whereas also monomer conversion, particle size, minimum film formation temperature, and glass transition temperature were measured.

EXAMPLES II-VI

In the same way as described in Example I, polymer latices were prepared from different sets of comonomers.

The respective amounts of the applied constituting monomers in per cent by weight as to total starting composition and the relevant properties of the latices obtained are listed in the following table.

### TABLE

| Latex examples | I | II | III | IV | V | VI |
|---|---|---|---|---|---|---|
| **Monomer composition (weight %)** | | | | | | |
| Methyl methacrylate | 33.0 | 28.0 | 34.0 | 47.0 | 15.0 | 50.0 |
| Butyl acrylate | 33.0 | 30.0 | 30.0 | 28.5 | 24.0 | 28.5 |
| VeoVa 5 | 33.0 | 40.0 | 35.0 | 23.0 | 60.0 | 20.0 |
| Acrylic acid | 1.0 | 2.0 | | | | |
| Methacrylic acid | | | 1.0 | | | |
| Methacrylamide | | | | 1.5 | | |
| Sodium vinyl sulphonate | | | | | 1.0 | |
| Diacetone acrylamide | | | | | | 1.5 |
| **Latex properties** | | | | | | |
| Conversion (% on monomer intake) | 99.5 | 99.5 | 99.6 | 99.6 | 99.4 | 99.6 |
| Solid content in % | 45.1 | 45.6 | 45.3 | 45.7 | 45.3 | 45.6 |
| Minimum film forming temperature (°C) | 19 | 22 | 24 | 26 | 42 | 37 |
| Particle size (nm) | 144 | 142 | 143 | 137 | 141 | 118 |
| Viscosity (mPa.s) | 30 | 40 | 30 | 40 | 30 | 40 |
| **Polymer properties** | | | | | | |
| Tg (°C) measured by D.S.C. | 21 | 24 | 26 | 33 | 31 | 31 |
| Water spot resistance (24 H exposure) | 7 | 7 | 6 | 10 | 6 | 8 |
| Water absorp. in % (thick film - 14 days) | 31.9 | 19.4 | 18.3 | 8.8 | 31.8 | 11.7 |

### Test methods

The water absorption of latex polymer and emulsion paint films (Thick film test method) was measured as described hereinafter.

A wet film of 2 mm thickness is applied on a polyethylene foil (the latex is kept on the foil by applying an automotive sealer on the edges of the foil). To avoid a too fast evaporation of water and as a result severe mud-cracking the panels are covered with some water vapour transmitting material and then stored at 20 °C above the Tg for a week. The cover is removed after clear films are formed. Three pieces of 2 x 2 cm are cut from the film after removal from the glass panel and weighed to the nearest 0.1 mg. These are stored in demineralised water at 23 °C and reweighed after 14 days (after removal of the excess of water by filter paper). The water absorption is calculated from the observed weight increase. The result of the triplicate measurements are averaged.

The water spot resistance of latex polymer films was measured as described hereinafter.

A wet latex film of 200 $\mu$m (micron) is applied on a glass panel and allowed to dry for a week at 20 °C above the Tg. When cooled to 23 °C a drop of water is brought on the film and the panel is placed on a dark underground. After 24 hrs the whitening effect is visually judged. A rating between 10 (film is unaffected) and 0 (film is completely white) is given.

In order to avoid evaporation of the water droplet, it can be covered overnight by a watch glass.

## Claims

### Claims for the following Contracting States : BE, CH, DE, FR, GB, IT, LI, NL, SE

1. Polymers obtainable by polymerisation of a starting comonomer mixture comprising

   (i) methyl methacrylate;
   (ii) butyl acrylate;
   (iii) the vinyl ester of pivalic acid;
   (iv) a stabilising monomer, selected from the group comprising acrylic acid, methacrylic acid, acrylamide, methacrylamide, diacetone acrylamide and sodium vinyl sulphonate and mixtures thereof, in an amount of from 0.5 to 5% by weight relative to the total weight of monomers,

   wherein the respective weight percentages of the components (i), (ii) and (iii) being calculated relative to the total weight of the sum of the amounts of these components, are simultaneously fulfilling the following equations, each describing compositions having equal performance contour lines in a triangle diagram:

   $$(I) \quad \text{CONV.} = 100\,x_1 + 100\,x_2 + 99.3\,x_3 + 0.2\,x_1.x_3 - 1\,x_2.x_3 - 4.8\,x_1.x_2.x_3$$

   $$(II) \quad T_g = 112\,x_1 - 44\,x_2 + 71\,x_3 - 88\,x_1.x_2 - 86\,x_1.x_3 - 66\,x_2.x_3 + 36\,x_1.x_2.x_3$$

   $$(III) \quad \text{WA} = 2\,x_1 + 62\,x_2 + 7\,x_3 + 56.8\,x_1.x_2 + 3.6\,x_1.x_3 + 17.6\,x_2.x_3 - 11.7\,x_1.x_2.x_3$$

   $$(IV) \quad \text{WSR} = 10\,x_1 + 10\,x_3 - 4\,x_1.x_2 - 12\,x_2.x_3 + 57\,x_1.x_2.x_3$$

   wherein CONV represents the monomer conversion and has a value of at least 99.0% (m/m) when an emulsion premix containing components (i) to (iv), an alkaryl sulphonate anionic surfactant, a non-ionic surfactant and potassium persulphate in demineralized water is added over 3 hours at 80 °C to the alkaryl sulphonate anionic surfactant and potassium persulphate in demineralized water, and the resulting mixture is digested for two hours at the same temperature, wherein the emulsion premix contains from 15.0 to 50.0 %wt of component (i), from 24.0 to 33.0 %wt of component (ii), from 20.0 to 60.0 %wt of component (iii) and from 1.0 to 2.0 %wt of component (iv), the weight percentages being based on the total of components (i) to (iv) and amounting to 100%, $T_g$ represents the glass transition temperature having a value in the range of from 0 °C to 50 °C, wherein WA represents the water absorption value being at most 45% m/m, wherein WSR represents the water spot resistance being at least 5, after 24 hours, wherein $x_1$ represents the weight percentage of component (i), $x_2$ represents the weight percentage of component (ii) and $x_3$ represents the weight percentage of component (iii), the values of $x_1$, $x_2$ and $x_3$ being at least 0.5% by weight, calculated on the total weight of components (i), (ii) and (iii).

2. Polymers according to claim 1, characterised in that they are derivable from comonomer mixtures, comprising methyl methacrylate (i), butyl acrylate (ii), vinyl esters of tertiary carboxylic acids containing 5 carbon atoms (iii), and acrylic acid (iv) the amount of acrylic acid ranging of from 0.5 to 2.0% by weight and the total amounting to 100%.

3. Polymers according to claim 2, characterised in that the weight fractions $x_1$, $x_2$ and $x_3$ of the components (i), (ii) and (iii) simultaneously fulfil the equations (I) to (IV), each describing compositions having equal performance contour lines in a triangle diagram wherein CONV has a value of at least 99.3% (m/m), $T_g$ has a value in the range from 10 to 35 °C, WA has a value of at most 35%, and WSR has a value of at least 6, after 24 hours as defined above, when applied in coating films, and wherein component (iv) is 1% acrylic acid by weight.

4. Polymers according to any one of claims 1 to 3, characterised in that they are derivable from a starting mixture comprising:

   from 3 to 61% by weight of methyl methacrylate;
   from 20 to 39% by weight of butyl acrylate;
   from 5 to 75% by weight of vinyl esters of tertiary carboxylic acids containing 5 carbon atoms; and
   1% by weight of acrylic acid, the total amounting to 100%.

5. A latex containing as polymeric constituent 40-60% by weight of a polymer according to any one of the claims 1 to 4.

6. Coating compositions comprising a latex according to claim 5 and at least one pigment.

7. A solid polymeric product formed by physical drying of a latex according to claim 5.

8. A process for the preparation of latices, containing the polymers according to any one of the claims 1 to 4, by polymerisation of the comonomer mixtures at a temperature in the range of from 60 to 100 °C in the presence of additional stabilisers, one or more polymerisation initiators.

9. Process according to claim 8, in which the polymerization is conducted at a temperature in the range of from 75 to 85 °C.

**Claims for the following Contracting State : ES**

1. Process comprising polymerisation of a starting comonomer mixture comprising

   (i) methyl methacrylate;
   (ii) butyl acrylate;
   (iii) the vinyl ester of pivalic acid;
   (iv) a stabilising monomer, selected from the group comprising acrylic acid, methacrylic acid, acrylamide, methacrylamide, diacetone acrylamide and sodium vinyl sulphonate and mixtures thereof, in an amount of from 0.5 to 5% by weight relative to the total weight of monomers,

   wherein the respective weight percentages of the components (i), (ii) and (iii) being calculated relative to the total weight of the sum of the amounts of these components, are simultaneously fulfilling the following equations, each describing compositions having equal performance contour lines in a triangle diagram:

$$(I) \quad CONV. = 100\, x_1 + 100\, x_2 + 99.3\, x_3 + 0.2\, x_1.x_3 - 1\, x_2.x_3 - 4.8\, x_1.x_2.x_3$$

$$(II) \quad T_g = 112\, x_1 - 44\, x_2 + 71\, x_3 - 88\, x_1.x_2 - 86\, x_1.x_3 - 66\, x_2.x_3 + 36\, x_1.x_2.x_3$$

$$(III) \quad WA = 2\, x_1 + 62\, x_2 + 7\, x_3 + 56.8\, x_1.x_2 + 3.6\, x_1.x_3 + 17.6\, x_2.x_3 - 11.7\, x_1.x_2.x_3$$

$$(IV) \quad WSR = 10\, x_1 + 10\, x_3 - 4\, x_1.x_2 - 12\, x_2.x_3 + 57\, x_1.x_2.x_3$$

wherein CONV represents the monomer conversion and has a value of at least 99.0% (m/m) when an emulsion premix containing components (i) to (iv), an alkaryl sulphonate anionic surfactant, a non-ionic surfactant and potassium persulphate in demineralized water is added over 3 hours at 80 °C to the alkaryl sulphonate anionic surfactant and potassium persulphate in demineralized water, and the resulting mixture is digested for two hours at the same temperature, wherein the emulsion premix contains from 15.0 to 50.0 %wt of component (i), from 24.0 to 33.0 %wt of component (ii), from 20.0 to 60.0 %wt of component (iii) and from 1.0 to 2.0 %wt of component (iv), the weight percentages being based on the total of components (i) to (iv) and amounting to 100%, $T_g$ represents the glass transition temperature having a value in the range of from 0 °C to 50 °C, wherein WA represents the water absorption value being at most 45% m/m, wherein WSR represents the water spot resistance being at least 5, after 24 hours, wherein $x_1$ represents the weight percentage of component (i), $x_2$ represents the weight percentage of component (ii) and $x_3$ represents the weight percentage of component (iii), the values of $x_1$, $x_2$ and $x_3$ being at least 0.5% by weight, calculated on the total weight of components (i), (ii) and (iii).

**2.** Process according to claim 1, characterised in that the comonomer mixtures comprise methyl methacrylate (i), butyl acrylate (ii), vinyl esters of tertiary carboxylic acids containing 5 carbon atoms (iii), and acrylic acid (iv) the amount of acrylic acid ranging of from 0.5 to 2.0% by weight and the total amounting to 100%.

**3.** Process according to claim 2, characterised in that the weight fractions $x_1$, $x_2$ and $x_3$ of the components (i), (ii) and (iii) simultaneously fulfil the equations (I) to (IV), each describing compositions having equal performance contour lines in a triangle diagram wherein CONV has a value of at least 99.3% (m/m), $T_g$ has a value in the range from 10 to 35 °C, WA has a value of at most 35%, and WSR has a value of at least 6, after 24 hours as defined above, when applied in coating films, and wherein component (iv) is 1% acrylic acid by weight.

**4.** Process according to any one of claims 1 to 3, characterised in that the starting mixture comprises:

from 3 to 61% by weight of methyl methacrylate;
from 20 to 39% by weight of butyl acrylate;
from 5 to 75% by weight of vinyl esters of tertiary carboxylic acids containing 5 carbon atoms; and
1% by weight of acrylic acid, the total amounting to 100%.

**5.** A process for the preparation of latices, containing the polymers obtainable by a process according to any one of the claims 1 to 4, by polymerisation of the comonomer mixtures at a temperature in the range of from 60 to 100 °C in the presence of additional stabilisers, one or more polymerisation initiators.

**6.** Process according to claim 6, in which the polymerization is conducted at a temperature in the range of from 75 to 85 °C.

**7.** Process comprising physical drying of a latex according to claim 6 or 7.

**Patentansprüche**

**Patentansprüche für folgende Vertragsstaaten : BE, CH, LI, DE, FR, GB, IT, NL, SE**

**1.** Polymerisate, erhältlich durch Polymerisation einer Ausgangscomonomermischung, enthaltend

(i) Methacrylsäuremethylester;
(ii) Acrylsäurebutylester;
(iii) Pivalinsäurevinylester;
(iv) ein stabilisierend wirkendes Monomer, ausgewählt aus der Gruppe Acrylsäure, Methacrylsäure, Acrylamid, Methacrylamid, Diacetonacrylamid und Natriumvinylsulfonat sowie deren Mischungen in einer Menge von 0,5 bis 5 Gew.-%, bezogen auf das Gesamtgewicht der Monomere,

wobei die jeweiligen Gewichtsprozentsätze der Komponenten (i), (ii) und (iii), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

(I) $\quad$ UMS.$= 100\,x_1 + 100\,x_2 + 99{,}3\,x_3 + 0{,}2\,x_1.x_3 - 1\,x_2.x_3 - 4{,}8\,x_1,x_2.x_3$

(II) $\quad T_g = 112\,x_1 - 44\,x_2 + 71\,x_3 - 88\,x_1.x_2 - 86\,x_1.x_3 - 66\,x_2.x_3 + 36\,x_1.x_2x_3$

(III) $\quad$ WA $= 2\,x_1 + 62\,x_2 + 7\,x_3 + 56{,}8\,x_1.x_2 + 3{,}6\,x_1.x_3 + 17{,}6\,x_2.x_3 - 11{,}7\,x_1.x_2.x_3$

(IV) $\quad$ WFB $= 10\,x_1 + 10\,x_3 - 4\,x_1.x_2 - 12\,x_2.x_3 + 57\,x_1.x_2.x_3$

wobei UMS den Monomerumsatz bedeutet und einen Wert von mindestens 99,0 Masse-% hat, wenn ein die Komponenten (i) bis (iv) , ein Alkarylsulfonat als anionisches Tensid, ein nichtionisches Tensid und Kaliumpersulfat in demineralisiertem Wasser enthaltender Emulsionspremix über einen Zeitraum von 3 Stunden bei 80°C zu dem Alkarylsulfonat als anionischem Tensid und Kaliumpersulfat in demineralisiertem Wasser gegeben wird und die erhaltene Mischung noch zwei Stunden bei der gleichen Temperatur nachreagieren gelassen wird, wobei der Emulsionspremix 15,0 bis 50,0 Gew.-% der Komponente (i), 24,0 bis 33,0 Gew.-% der Komponente (ii), 20,0 bis 60,0 Gew.-% der Komponente (iii) und 1,0 bis 2,0 Gew.-% der Komponente (iv) enthält, wobei die Gewichtsprozentsätze auf die Gesamtmenge der Komponenten (i) bis (iv) bezogen sind und sich auf 100% belaufen; $T_g$ die Glasübergangstemperatur mit einem Wert im Bereich von 0 bis 50°C; WA den Wasseraufnahmewert von höchstens 45 Masse-%; WFB die Wasserfleckbeständigkeit, die nach 24 Stunden mindestens 5 beträgt; $x_1$ den Gewichtsanteil der Komponente (i); $x_2$ den Gewichtsanteil der Komponente (ii) und $x_3$ den Gewichtsanteil der Komponente (iii) bedeuten, wobei die Werte von $x_1$, $x_2$ und $x_3$, bezogen auf das Gesamtgewicht der Komponenten (i), (ii) und (iii), mindestens 0,5 Gew.-% betragen.

2. Polymerisate nach Anspruch 1, dadurch gekennzeichnet, daß sie sich aus Comonomermischungen, enthaltend Methacrylsäuremethylester (i), Acrylsäurebutylester (ii), Vinylester von tertiären Carbonsäuren mit 5 Kohlenstoffatomen (iii) und Acrylsäure (iv) ableiten lassen, wobei die Acrylsäuremenge im Bereich von 0,5 bis 2,0 Gew.-% liegt und die Gesamtmenge 100% beträgt.

3. Polymerisate nach Anspruch 2, dadurch gekennzeichnet, daß die Gewichtsanteile $x_1$, $x_2$ und $x_3$ der Komponenten (i), (ii) und (iii) gleichzeitig die jeweils Zusammensetzungen gleicher Leistungskonturlinien in einem Dreiecksdiagramm beschreibenden Gleichungen (I) bis (IV) erfüllen, wobei UMS einen Wert von mindestens 99,3 Masse-%; $T_g$ einen Wert im Bereich von 10 bis 35°C; WA einen Wert von höchstens 35% und WFB bei Verwendung in Überzugsfilmen nach 24 Stunden, wie oben definiert, einen Wert von mindestens 6 hat und es sich bei der Komponente (iv) um 1 Gew.-% Acrylsäure handelt.

4. Polymerisate nach einem der Ansprüche 1 bis 3, dadurch gekennzeichhet, daß sie sich aus einer Ausgangsmischung, enthaltend:

   3 bis 61 Gew.-% Methacrylsäuremethylester;
   20 bis 39 Gew.-% Acrylsäurebutylester;
   5 bis 75 Gew.-% Vinylester von tertiären Carbonsäuren mit 5 Kohlenstoffatomen und
   1 Gew.-% Acrylsäure, ableiten lassen, wobei die Gesamtmenge 100% beträgt.

5. Latex, das als polymeren Bestandteil 40-60 Gew.-% eines Polymerisats nach einem der Ansprüche 1 bis 4 enthält.

6. Beschichtungszusammensetzungen, enthaltend einen Latex nach Anspruch 5 und mindestens ein Pigment.

7. Festes, polymerisiertes Produkt, gebildet durch physikalisches Trocknen eines Latex nach Anspruch 5.

8. Verfahren zur Herstellung von Latices, die die Polymerisate nach einem der Ansprüche 1 bis 4 enthalten, durch Polymerisation der Comonomermischungen bei einer Temperatur im Bereich von 60 bis 100°C in Gegenwart weiterer Stabilisatoren sowie eines oder mehrerer Polymerisationsinitiatoren.

9. Verfahren nach Anspruch 8, bei dem man die Polymerisation bei einer Temperatur im Bereich von 75 bis 85°C durchführt.

**Patentansprüche für folgenden Vertragsstaat : ES**

1. Verfahren zur Polymerisation einer Ausgangscomonomermischung, enthaltend

    (i) Methacrylsäuremethylester;
    (ii) Acrylsäurebutylester;
    (iii) Pivalinsäurevinylester;
    (iv) ein stabilisierend wirkendes Monomer, ausgewählt aus der Gruppe Acrylsäure, Methacrylsäure, Acrylamid, Methacrylamid, Diacetonacrylamid und Natriumvinylsulfonat sowie deren Mischungen in einer Menge von 0,5 bis 5 Gew.-%, bezogen auf das Gesamtgewicht der Monomere,

wobei die jeweiligen Gewichtsprozentsätze der Komponenten (i), (ii) und (iii), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

$$\text{(I)} \qquad \text{UMS.} = 100\,x_1 + 100\,x_2 + 99{,}3\,x_3 + 0{,}2\,x_1.x_3 - 1\,x_2.x_3 - 4{,}8\,x_1.x_2.x_3$$

$$\text{(II)} \qquad T_g = 112\,x_1 - 44\,x_2 + 71\,x_3 - 88\,x_1.x_2 - 86\,x_1.x_3 - 66\,x_2.x_3 + 36\,x_1.x_2.x_3$$

$$\text{(III)} \qquad \text{WA} = 2\,x_1 + 62\,x_2 + 7\,x_3 + 56{,}8\,x_1.x_2 + 3{,}6\,x_1.x_3 + 17{,}6\,x_2.x_3 - 11{,}7\,x_1.x_2.x_3$$

$$\text{(IV)} \qquad \text{WFB} = 10\,x_1 + 10\,x_3 - 4\,x_1.x_2 - 12\,x_2.x_3 + 57\,x_1.x_2.x_3$$

wobei UMS den Monomerumsatz bedeutet und einen Wert von mindestens 99,0 Masse-% hat, wenn ein die Komponenten (i) bis (iv), ein Alkarylsulfonat als anionisches Tensid, ein nichtionisches Tensid und Kaliumpersulfat in demineralisiertem Wasser enthaltender Emulsionspremix über einen Zeitraum von 3 Stunden bei 80°C zu dem Alkarylsulfonat als anionischem Tensid und Kaliumpersulfat in demineralisiertem Wasser gegeben wird und die erhaltene Mischung noch zwei Stunden bei der gleichen Temperatur nachreagieren gelassen wird, wobei der Emulsionspremix 15,0 bis 50,0 Gew.-% der Komponente (i), 24,0 bis 33,0 Gew.-% der Komponente (ii), 20,0 bis 60,0 Gew.-% der Komponente (iii) und 1,0 bis 2,0 Gew.-% der Komponente (iv) enthält, wobei die Gewichtsprozentsätze auf die Gesamtmenge der Komponenten (i) bis (iv) bezogen sind und sich auf 100% belaufen; $T_g$ die Glasübergangstemperatur mit einem Wert im Bereich von 0 bis 50°C; WA den Wasseraufnahmewert von höchstens 45 Masse-%; WFB die Wasserfleckbeständigkeit, die nach 24 Stunden mindestens 5 beträgt; $x_1$ den Gewichtsanteil der Komponente (1); $x_2$ den Gewichtsanteil der Komponente (ii) und $x_3$ den Gewichtsanteil der Komponente (iii) bedeuten, wobei die Werte von $x_1$, $x_2$ und $x_3$, bezogen auf das Gesamtgewicht der Komponenten (i), (ii) und (iii), mindestens 0,5 Gew.-% betragen.

2. Verfahren nach Anspruch 1, dadurch gekennzeichnet, daß die Comonomermischungen Methacrylsäuremethylester (i), Acrylsäurebutylester (ii), Vinylester von tertiären Carbonsäuren mit 5 Kohlenstoffatomen (iii) und Acrylsäure (iv) enthalten, wobei die Acrylsäuremenge im Bereich von 0,5 bis 2,0 Gew.-% liegt und die Gesamtmenge 100% beträgt.

3. Verfahren nach Anspruch 2, dadurch gekennzeichnet, daß die Gewichtsanteile $x_1$, $x_2$ und $x_3$ der Komponenten (i), (ii) und (iii) gleichzeitig die jeweils Zusammensetzungen gleicher Leistungskonturlinien in einem Dreiecksdiagramm beschreibenden Gleichungen (I) bis (IV) erfüllen, wobei UMS einen Wert von mindestens 99,3 Masse-%; $T_g$ einen Wert im Bereich von 10 bis 35°C; WA einen Wert von höchstens 35% und WFB bei Verwendung in Überzugs filmen nach 24 Stunden, wie oben definiert, einen Wert von mindestens 6 hat und es sich bei der Komponente (iv) um 1 Gew.-% Acrylsäure handelt.

4. Verfahren nach einem der Ansprüche 1 bis 3, dadurch gekennzeichnet, daß die Ausgangsmischung

    3 bis 61 Gew.-% Methacrylsäuremethylester;
    20 bis 39 Gew.-% Acrylsäurebutylester;
    5 bis 75 Gew.-% Vinylester von tertiären Carbonsäuren mit 5 Kohlenstoffatomen und

1 Gew.-% Acrylsäure enthält, wobei die Gesamtmenge 100% beträgt.

5. Verfahren zur Herstellung von Latices, enthaltend die nach einem Verfahren nach einem der Ansprüche 1 bis 4 erhältlichen Polymerisate durch Polymerisation der Comonomermischungen bei einer Temperatur im Bereich von 60 bis 100°C in Gegenwart weiterer Stabilisatoren sowie eines oder mehrerer Polymerisationsinitiatoren.

6. Verfahren nach Anspruch 7, bei dem man die Polymerisation bei einer Temperatur im Bereich von 75 bis 85°C durchführt.

7. Verfahren, bei dem man einen Latex nach Anspruch 5 oder 6 physikalisch trocknet.

**Revendications**

**Revendications pour les Etats contractants suivants : BE, CH, LI, DE, FR, GB, IT, NL, SE**

1. Polymères que l'on peut obtenir par polymérisation à partir d'un mélange de comonomères de départ comprenant :

(i) du méthacrylate de méthyle,
(ii) de l'acrylate de butyle,
(iii) l'ester vinylique de l'acide pivalique ("pivalate de vinyle"),
(iv) un monomère stabilisateur, choisi dans le groupe formé par l'acide acrylique, l'acide méthacrylique, l'acrylamide, le méthacrylamide, le diacétoneacrylamide et le vinylsulphonate de sodium et leurs mélanges, en une proportion de 0,5 à 5% en poids par rapport au poids total des monomères,

où les pourcentages pondéraux respectifs des composants (i), (ii) et (iii), calculés par rapport au poids total de la somme des proportions de ces composants, satisfont simultanément aux équations suivantes, chacune décrivant des compositions possédant des lignes de contour de performances égales dans un diagramme triangulaire :

$$(I) \quad CONV. = 100\, x_1 + 100\, x_2 + 99{,}3\, x_3 + 0{,}2\, x_1.x_3 - 1\, x_2.x_3 - 4{,}8\, x_1.x_2.x_3$$

$$(II) \quad T_g = 112\, x_1 - 44\, x_2 + 71\, x_3 - 88\, x_1.x_2 - 86\, x_1.x_3 - 66\, x_2.x_3 + 36\, x_1.x_2.x_3$$

$$(III) \quad AE = 2\, x_1 + 62\, x_2 + 7\, x_3 + 56{,}8\, x_1.x_2 + 3{,}6\, x_1.x_3 + 17{,}6\, x_2.x_3 - 11{,}7\, x_1.x_2.x_3$$

$$(IV) \quad RTE = 10\, x_1 + 10\, x_3 - 4\, x_1.x_2 - 12\, x_2.x_3 + 57\, x_1.x_2.x_3$$

où CONV représente la conversion des monomères et possède une valeur d'au moins 99,0% (m/m) lorsqu'un prémélange en émulsion contenant des composants (i) à (iv), un surfactif anionique du type alkarylsulfonate, un surfactif non ionique et du persulfate de potassium, dans de l'eau déminéralisée, est ajouté à 80°C et en l'espace de 3 heures au surfactif anionique du type alkarylsulfonate et persulfate de potassium dans de l'eau déminéralisée, et le mélange résultant est digéré à la même température pendant deux heures, où le prémélange en émulsion contient de 15,0 à 50,0% en poids de composant (i), de 24,0 à 33,0% en poids de composant (ii), de 20,0 à 60,0% en poids de composant (iii) et de 1,0 à 2,0% en poids de composant (iv), les pourcentages pondéraux étant basés sur le total des composants (i) à (iv) et s'élevant à 100%, $T_g$ représente la température de transition vitreuse possédant une valeur qui fluctue de 0°C à 50°C, où AE représente la valeur d'absorption d'eau qui est au maximum de 45% m/m, où RTE représente la valeur de la résistance à la tache d'eau, qui est d'au moins 5, après 24 heures, où $x_1$ représente le pourcentage pondéral du composant (i), $x_2$ représente le pourcentage pondéral du composé (ii) et $x_3$ représente le pourcentage pondéral du composant (iii), les valeurs de $x_1$, $x_2$ et $x_3$ étant d'au moins 0,5% en poids, calculées sur le poids total des composants (i), (ii) et (iii).

2. Polymères suivant la revendication 1, caractérisés en ce qu'ils peuvent s'obtenir à partir de mélanges de comonomères, comprenant du méthacrylate de méthyle (i), de l'acrylate de butyle (ii), des esters vinyliques d'acides carboxyliques tertiaires contenant 5 atomes de carbone (iii), et de l'acide acrylique (iv), la proportion de l'acide acrylique fluctuant de 0,5 à 2,0% en poids et le total s'élevant à 100%.

3. Polymères suivant la revendication 2, caractérisés en ce que les fractions pondérales $x_1$, $x_2$ et $x_3$ des composants (i), (ii) et (iii) satisfont simultanément aux équations (I) à (IV) décrivant chacune des compositions possédant des lignes de contour de performances égales dans un diagramme triangulaire, où CONV a une valeur d'au moins 99,3% (m/m), $T_g$ a une valeur qui varie de 10 à 35°C, AE a une valeur d'au maximum 35% et RTE a une valeur d'au moins 6, après 24 heures, comme défini plus haut, à l'état appliqué en films de revêtement et où le composant (iv) est de l'acide acrylique à raison de 1% en poids.

4. Polymères suivant l'une quelconque des revendications 1 à 3, caractérisés en ce qu'on peut les obtenir à partir d'un mélange de départ comprenant :

   de 3 à 61% en poids de méthacrylate de méthyle,
   de 20 à 39% en poids d'acrylate de butyle,
   de 5 à 75% en poids d'esters vinyliques d'acides carboxyliques tertiaires contenant 5 atomes de carbone, et
   1% en poids d'acide acrylique, le total s'élevant à 100%.

5. Latex contenant, à titre de constituant polymérique, 40 à 60% en poids d'un polymère suivant l'une quelconque des revendications 1 à 4.

6. Compostions de revêtement comprenant un latex suivant la revendication 5 et au moins un pigment.

7. Produit polymérique solide formé par le séchage physique d'un latex suivant la revendication 5.

8. Procédé de préparation de latex contenant les polymères suivant l'une quelconque des revendications 1 à 4, par polymérisation des mélanges de comonomères à une température comprise entre 60 et 100°C en présence de stabilisateurs supplémentaires et d'un ou plusieurs amorceurs de polymérisation.

9. Procédé suivant la revendication 8, caractérisé en ce que l'on entreprend la polymérisation à une température qui varie de 75 à 85°C.

**Revendications pour l'Etat contractant suivant : ES**

1. Polymères comprenant la polymérisation d'un mélange de comonomères de départ comprenant :

   (i) du méthacrylate de méthyle,
   (ii) de l'acrylate de butyle,
   (iii) l'ester vinylique de l'acide pivalique,
   (iv) un monomère stabilisateur, choisi dans le groupe formé par l'acide acrylique, l'acide méthacrylique, l'acrylamide, le méthacrylamide, le diacétoneacrylamide et le vinylsulphonate de sodium et leurs mélanges, en une proportion de 0,5 à 5% en poids par rapport au poids total des monomères,

   où les pourcentages pondéraux respectifs des composants (i), (ii) et (iii), calculés par rapport au poids total de la somme des proportions de ces composants, satisfont simultanément aux équations suivantes, chacune décrivant des compositions possédant des lignes de contour de performances égales dans un diagramme triangulaire :

$$\text{(I)} \qquad \text{CONV.} = 100\, x_1 + 100\, x_2 + 99{,}3\, x_3 + 0{,}2\, x_1.x_3 - 1\, x_2.x_3 - 4{,}8\, x_1.x_2.x_3$$

$$\text{(II)} \qquad T_g = 112\, x_1 - 44\, x_2 + 71\, x_3 - 88\, x_1.x_2 - 86\, x_1.x_3 - 66\, x_2.x_3 + 36\, x_1.x_2.x_3$$

$$\text{(III)} \qquad AE = 2\, x_1 + 62\, x_2 + 7\, x_3 + 56{,}8\, x_1.x_2 + 3{,}6\, x_1.x_3 + 17{,}6\, x_2.x_3 - 11{,}7\, x_1.x_2.x_3$$

$$(IV) \qquad RTE = 10\,x_1 + 10\,x_3 - 4\,x_1.x_2 - 12\,x_2.x_3 + 57\,x_1.x_2.x_3$$

où CONV représente la conversion des monomères et possède une valeur d'au moins 99,0% (m/m) lorsqu'un prémélange en émulsion contenant des composants (i) à (iv), un surfactif anionique du type alkarylsulfonate, un surfactif non ionique et du persulfate de potassium, dans de l'eau déminéralisée, est ajouté à 80°C et en l'espace de 3 heures au surfactif anionique du type alkarylsulfonate et persulfate de potassium dans de l'eau déminéralisée, et le mélange résultant est digéré à la même température pendant deux heures, où le prémélange en émulsion contient de 15,0 à 50,0% en poids de composant (i), de 24,0 à 33,0% en poids de composant (ii), de 20,0 à 60,0% en poids de composant (iii) et de 1,0 à 2,0% en poids de composant (iv), les pourcentages pondéraux étant basés sur le total des composants (i) à (iv) et s'élevant à 100%, $T_g$ représente la température de transition vitreuse possédant une valeur qui fluctue de 0°C à 50°C, où AE représente la valeur d'absorption d'eau qui est au maximum de 45% m/m, où RTE représente la valeur de la résistance à la tache d'eau, qui est d'au moins 5, après 24 heures, où $x_1$ représente le pourcentage pondéral du composant (i), $x_2$ représente le pourcentage pondéral du composé (ii) et $x_3$ représente le pourcentage pondéral du composant (iii), les valeurs de $x_1$, $x_2$ et $x_3$ étant d'au moins 0,5% en poids, calculées sur le poids total des composants (i), (ii) et (iii).

2.  Procédé suivant la revendication 1, caractérisé en ce que les mélanges de comonomères comprennent du méthacrylate de méthyle (i), de l'acrylate de butyle (ii), des esters vinyliques d'acides carboxyliques tertiaires contenant 5 atomes de carbone (iii), et de l'acide acrylique (iv), la proportion de l'acide acrylique fluctuant de 0,5 à 2,0% en poids et le total s'élevant à 100%.

3.  Procédé suivant la revendication 2, caractérisé en ce que les fractions pondérales $x_1$, $x_2$ et $x_3$ des composants (i), (ii) et (iii) satisfont simultanément aux équations (I) à (IV) décrivant chacune des compositions possédant des lignes de contour de performances égales dans un diagramme triangulaire, où CONV a une valeur d'au moins 99,3% (m/m), $T_g$ a une valeur qui varie de 10 à 35°C, AE a une valeur d'au maximum 35% et RTE a une valeur d'au moins 6, après 24 heures, comme défini plus haut, à l'état appliqué en films de revêtement et où le composant (iv) est de l'acide acrylique à raison de 1% en poids.

4.  Procédé suivant l'une quelconque des revendications 1 à 3, caractérisé en ce que le mélange de départ comprend :

    de 3 à 61% en poids de méthacrylate de méthyle,
    de 20 à 39% en poids d'acrylate de butyle,
    de 5 à 75% en poids d'esters vinyliques d'acides carboxyliques tertiaires contenant 5 atomes de carbone, et
    1% en poids d'acide acrylique, le total s'élevant à 100%.

5.  Procédé de préparation de latex contenant les polymères obtenus par mise en oeuvre du procédé suivant l'une quelconque des revendications 1 à 4, par la polymérisation des mélanges de comonomères à une température qui fluctue de 60 et 100°C, en présence de stabilisateurs supplémentaires et d'un ou plusieurs amorceurs de polymérisation.

6.  Procédé suivant la revendication 5, caractérisé en ce que l'on entreprend la polymérisation à une température qui varie de 75 à 85°C.

7.  Procédé, caractérisé en ce que l'on sèche physiquement un latex suivant l'une quelconque des revendications 5 ou 6.

The shaded area represents
the starting comonomer
compositions containing:-
Methy-methacrylate – Butyl acrylate – VeoVa5

FIG. 1

The shaded area represents the
preferred starting comonomer
compositions containing :-
Methyl methacrylate-Butyl acrylate-VeoVa5

FIG. 2